# EUROPEAN PATENT APPLICATION

(11) **EP 2 221 521 A1**
(43) Date of publication of application: **25.08.2010**
(21) Application number: 09002260.9
(22) Date of filing: 18.02.2009
(51) Int. Cl.: F16L 55/02, F16L 55/04

(54) **Fluid-bearing appliance with an improved pipe connector**

(71) Applicant: Electrolux Home Products Corporation N.V., 1930 Zaventem (BE)
(72) Inventor: Poloni, Fabio, 33078 San Vito al Tagliamento (PN) (IT)
(74) Representative: Nardoni, Andrea

(57) **Abstract**

The present invention relates to a fluid-bearing appliance, that is an appliance bearing a liquid or a gas, such as a laundry washing machine, a laundry dryer, a washer-dryer machine, a dishwasher or a steam iron, having an improved pipe connector (2).

A fluid-bearing appliance according to the invention comprises one or more fluid lines (1, 7) having at least one pipe connector (2), Said connector (2) comprises a hollow body (10) having a first and a second open end (11, 12) each of them being adapted to be connected to a pipe (5, 20), said hollow body (10) further comprises a first outer wall (13) extending around a longitudinal axis Y of the connector (2) and joining said open ends (11, 12). Said at least one pipe connector (2) comprises a second inner wall (15), facing said first outer wall (13), inwardly extending around the longitudinal axis Y from one of the ends (11, 12) to the other (12, 11), for guiding a fluid flowing through said connector (2), said second wall (15) having a third free end (17) provided between the first and the second ends (11, 12) of said hollow body (10) for allowing said outer wall (13) to damp displacements that can involve one or both sides of the line (1) reciprocally associated through pipe connector (2).

## Description

The present invention relates to a fluid-bearing appliance, that is an appliance bearing a liquid or a gas, such as a laundry washing machine, a laundry dryer, a washer-dryer machine, a dishwasher or a steam iron, having an improved pipe connector.

It is known in the art that fluid-bearing appliances are provided with pipe lines and pipe connectors that must ensure not only absence of fluid leakage but also an efficient conveyance of fluid from a first part of a pipe line to a second part connected thereto via said pipe connector. Many pipe lines inside a fluid-bearing appliance have portions that are stably fixed to a stationary member of the appliance, like for example the cabinet, and further portions that are linked to members that are subject to oscillatory movements such as the tub in a laundry treating machine. Pipe lines of this type require pipe connectors that can work under dynamical conditions ensuring an efficient conveyance of fluid. For this aim many types of pipe connectors have been proposed.

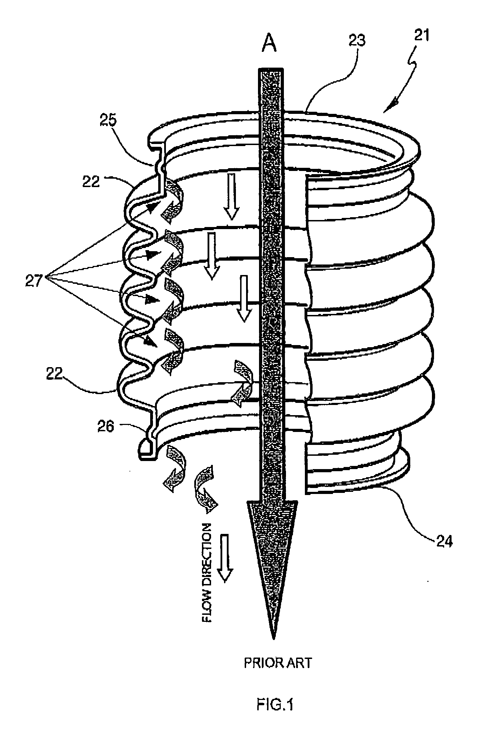

One of said known types of pipe connectors is shown in figure 1. Such connector is in the form of a flexible hollow bellows element 21 having a plurality of corrugations 22 running concentrically round the bellows longitudinal axis in successive arrangement. Both ends 23, 24 of the bellows element 21 are provided with a socket 25, 26 adapted to receive a pipe thereon. Corrugations 22 are provided for conferring a high elasticity to the bellows element 21 for allowing connection of pipe lines parts subject to vibrations.

A drawback of the above mentioned known type of pipe connectors consists in that, when a fluid passes through the bellows element 21 along its longitudinal axis as shown by arrow A in figure 1, corrugations 22 cause formation of eddies 27 within the annular portions thereof. Such eddies disturb the fluid flow and generate not only turbulence causing vibrations and oscillations within the pipe because an irregular flow occurs but also a pressure and flow rate drop determining a noisy and energy consuming operation of a fluid-bearing appliance. In case the fluid passing the bellows element 21 is air or, in general, a gas even whistles can occur. All these drawbacks are particularly undesirable in a household appliance that is requested to operate as silently as possible.

The aim of the present invention is therefore to solve the noted drawbacks and thus providing a fluid-bearing appliance comprising one or more pipe lines wherein pipe connectors ensure an efficient fluid transfer from a part of the pipe line to another joined thereto.

An object of the present invention is to provide a fluid-bearing appliance wherein pipe connectors are designed for reducing drastically flow rate and pressure drops.

A further object of the invention is to provide a fluid-bearing appliance wherein pipe connectors allow connected pipes to be reciprocally movable.

Another object of the invention is to provide a fluid-bearing appliance producing a lower noise level compared to prior art fluid-bearing appliances, thereby allowing a reduction in power consuming.

A further object of the invention is to provide a pipe connector, especially for fluid-bearing appliances, having a simpler design compared to prior art connectors like that shown in figure 1.

Still another object of the invention is to provide a pipe connector wherein formation of eddies and vortices is reduced compared to prior art connectors like that shown in figure 1.

Advantages, objects, and features of the invention will be set forth in part in the description and drawings which follow and in part will become apparent to those having ordinary skill in the art upon examination of the following or may be learned from practice of the invention. The objects and advantages of the invention may be realised and attained as particularly pointed out in the appended claims.

The accompanying drawings, which are included to provide a further understanding of the invention and are incorporated in and constitute a part of this specification, illustrate a possible embodiment of the invention and together with the description serve to explain the principles of the invention.

In the drawings:

Figure 1 shows a pipe connector according to the prior art;

Figure 2 schematically shows a fluid-bearing appliance with a pipe line having a pipe connector according to the invention;

Figure 3 shows an improved pipe connector according to the present invention;

In the following description with the expression "fluid-bearing appliance" it is intended all kind of appliances in which a fluid, that is liquid or gas, is used or treated in the working cycle of the appliance. Examples of fluid-bearing appliances comprised in the present disclosure are laundry washing machines, laundry dryers, washing-drying machines, dishwashers and steam irons.

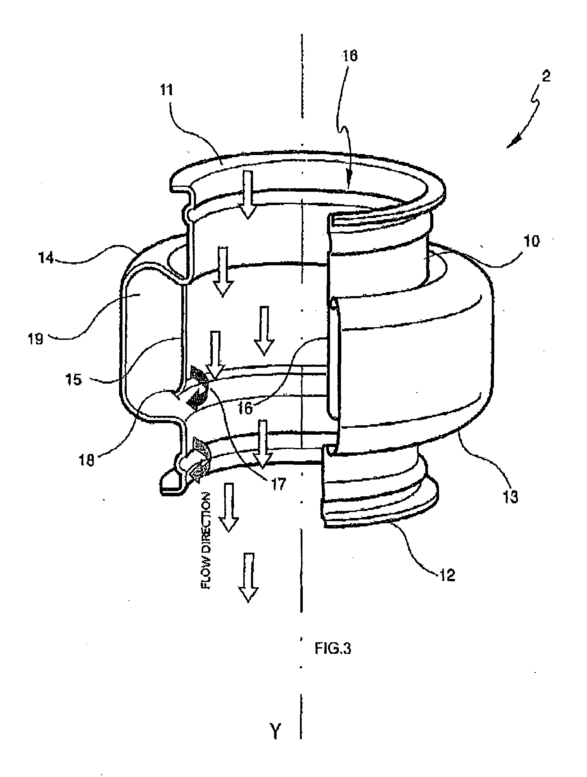

As a mere example of a possible way of carrying out the invention, figure 1 shows a washing-drying machine, i.e. an appliance adapted to wash and dry laundry, provided with an air line 1 having a pipe connector 2, through which drying air flows following direction indicated by arrows drawn along the line 1. During a laundry drying cycle, drying air is heated by heating means 31 placed within a manifold 32 of the air line 1. Manifold 32 receives air from pumping means 8 for subsequently introducing said air into a drum 3 rotating within a tub 4. After being passed through laundry to be dried, said air becomes humid and it is exhausted by a conduit 5 to a condenser 6 where evaporated moisture is condensed by a water jet (not shown in figure 1) propelling cool water through the air path. Condenser 6 has a hollow box-like structure 20 that forms a part of the line 1. Conduit 5 and condenser 6 are reciprocally associated by means of a pipe connector 2 shown in grater detail in figure 3.

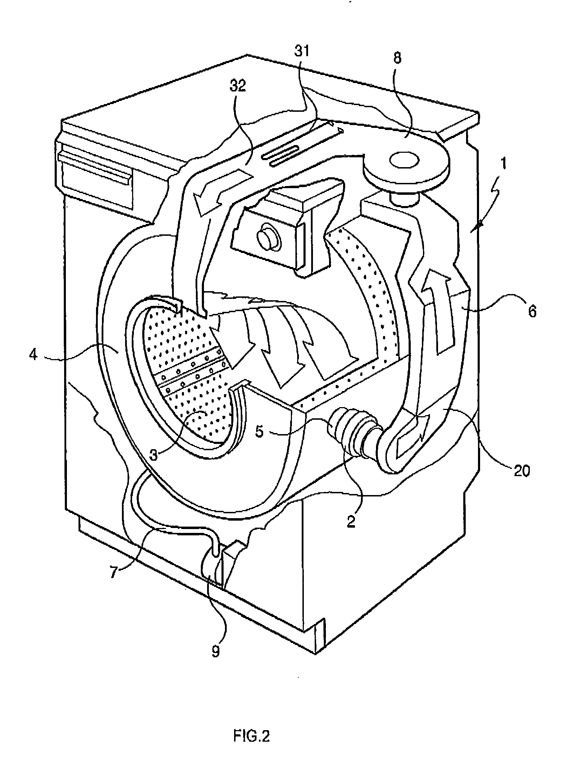

Laundry treating machine shown in figure 1 comprises also a further fluid line 7 comprising a conduit wherein water circulates for carrying out laundry washing operations. Appropriate pumping means 8, 9 of known type are provided for moving fluid within pipe lines 1 and 7. Even if not shown in Figure 2, a pipe connector 2 according to the invention can be provided also in such fluid line 2 if needed.

With reference to figure 3, a pipe connector 2 comprises a hollow body 10 having a first and a second open end 11, 12 arranged on opposite sides of the body 10. Open ends 11, 12 are adapted to be connected to a pipe, i.e. a conduit suitable for receiving a flowing fluid, like a liquid or a gas. Hollow body 10 comprises an outer wall 13 extending between connector ends 11, 12 around the longitudinal axis Y of the body 10. The outer wall 13 joins the open ends 11, 12.

Said outer wall 13 may comprise a toroid-like region 14, having, preferably, an extension in a transverse, preferably radial, direction relative to longitudinal axis Y which is larger than the openings defined by the ends 11, 12. The toroid-like region 14 is adapted to damp vibrations induced by oscillatory movement that can involve one or both sides of the line 1 reciprocally associated through pipe connector 2.

As shown in figure 2, conduit 5 is subject to vibrations generated by tub 4 when the appliance is working, since the box-like structure 20 of condenser 6 is stationary because it is fixed to a stationary part of the machine, such as the cabinet, it is desired that said vibrations are not transferred to the condenser 6 structure, in order not to cause damages to the line 1 and the condenser itself.

For reducing turbulence of the fluid passing through the pipe connector 2, the latter is provided with an inner wall 15 that, starting from one of the open ends 11, 12, inwardly extends around the longitudinal axis Y, towards the opposite end 12, 11 of the hollow body 10. Inner wall 15 forms a tubular member 16 that faces the outer wall 13 and is coaxially arranged in the inner side of the hollow body 10, so as to be surrounded by the outer wall 13. Inner wall 15 has an end portion 11 in common with said body 10 and a further end portion 17 placed between the open ends 11, 12 of the hollow body 10. The end portion 17 is arranged as a cantilever inside the hollow body 10, i.e. it is a free annular end portion within body 10.

Preferably, end region 17 has an edge portion 18 outwardly tapered relative to the longitudinal axis. In other words, the edge portion 18 may be flaring towards the outer wall 13.

A region of the inner wall 15 is inwardly spaced apart from outer wall 13 such that an air gap 19 is comprised between walls 13 and 15. Thanks to this construction a fluid entering the open end 11 that works as an inlet port, and flowing through the connector 2 is guided by the inner wall 15 avoiding to have its flow path perturbed. Therefore, the inner wall 15 with its free end 17 keep the fluid flow path regular allowing the above described outer wall 13 and, in general, the whole region 14 of the connector 2 to damp vibrations, oscillations and noise produced by a fluid passing through said connector 2 and to cushion/damp displacements that can take place at both open ends 11, 12 of the pipe connector 2 due to relative reciprocal movements of the tub 4 and condenser 6 (the rotating drum causes the tub to move). Only in correspondence of the free end 17 a slight turbulence may occur, but it is negligible because it cannot grow generating eddies since the fluid flow rapidly reaches the end 12 working as outlet port of the connector 2. An inner wall 15 having a substantially smooth surface, i.e. a surface without protuberances or a high roughness, in contact with fluid helps in avoiding turbulence and eddies formation.

In a preferred embodiment, pipe connector 2 is formed as a one-piece structure of a flexible material, such as a polymeric material. If desired, however, the connector 2 may be rigid or even metallic.

Conclusively it can be stated that a fluid-bearing appliance according to the invention has pipe lines wherein fluid flow disturbance due to pipe connector is advantageously reduced. This allows such an appliance to operate with lower noise and vibrations production, thereby improving the general appliance quality. A pipe connector designed in accordance with the present invention is simple and efficient, contributing to reduce power consumption of the fluid-bearing appliance. The improved pipe connector allows pipes connected thereto to be reciprocally movable.

As described above, a pipe connector according to the invention can be applied in a large variety of appliances such as laundry washing machines, laundry dryers, washing-drying machines, dishwashers or steam irons, i.e. appliances where a fluid flow is requested to perform a working cycle. Naturally dimensions and materials used for producing a pipe connector according to the invention are the most suitable depending on the working and design conditions of the pipe line where the connector is included.

## Claims

1. Fluid-bearing appliance comprising one or more fluid lines (1, 7) having at least one pipe connector (2) that comprises a hollow body (10) having a first and a second open end (11, 12) each of them being adapted to be connected to a pipe (5, 20), said hollow body (10) further comprising a first outer wall (13) extending around a longitudinal axis Y of the connector (2) and joining said open ends (11, 12) **characterized in that** said at least one pipe connector (2) comprises a second inner wall (15), facing said first wall (13), inwardly extending around the longitudinal axis Y from one of the ends (11, 12) to the other (12, 11) for guiding a fluid flowing through said connector (2), said second wall (15) having a third free end (17) provided between the first and the second ends (11, 12) of said hollow body (10) for allowing said outer wall (13) to damp displacements that can involve one or both sides of the line (1) reciprocally associated through pipe connector (2).

2. Fluid-bearing appliance according to claim 1 wherein an air gap (19) is comprised between a portion of said first and second walls (13, 15).

3. Fluid-bearing appliance according to claim 1 or 2 wherein said third free end (17) comprises an edge region (18) outwardly tapered towards the outer first wall (13).

4. Pipe connector according to any preceding claim wherein said second wall (15) forms a tubular member (16) coaxially arranged in an inner side of the hollow body 10, said second wall (15) having an end portion (11) in common with said body (10) and a further free end portion (17) arranged as a cantilever inside the hollow body (10).

5. Fluid-bearing appliance according to any preceding claim wherein said first open end (11) is a fluid inlet port and said second open end (12) is a fluid outlet port and wherein said third free end (17) is arranged in proximity of said fluid outlet port (12).

6. Fluid-bearing appliance according to any preceding claim wherein said first wall (13) comprises a toroid-like region (14) provided between said first and second ends (11, 12).

7. Fluid-bearing appliance according to any preceding claim wherein said hollow body (10) has a one-piece structure made of polymeric material.

8. Fluid-bearing appliance according to any preceding claim wherein said second wall (15) has a substantially smooth surface exposed to a fluid flowing within said pipe connector (2).

9. Fluid-bearing appliance according to any preceding claim **characterized by** being a washing and/or drying machine.

10. Fluid-bearing appliance according to any preceding claim comprising a tub (4) adapted to receive a fluid, and moisture condensing means (6) in fluid communication with the tub (4) through said pipe connector (2) provided therebetween.
